# EUROPEAN PATENT SPECIFICATION

(11) **EP 4 489 122 B1**
(45) Date of publication and mention of the grant of the patent: **01.04.2026**
(21) Application number: 23774302.6
(22) Date of filing: 13.02.2023
(51) Int. Cl.: H01M 4/505, C01G 53/00, H01M 4/525

(54) **POSITIVE ELECTRODE ACTIVE MATERIAL, METHOD FOR PRODUCING SAME AND NONAQUEOUS ELECTROLYTE SECONDARY BATTERY**
POSITIVELEKTRODENAKTIVMATERIAL, VERFAHREN ZUR HERSTELLUNG DAVON UND SEKUNDÄRBATTERIE MIT WASSERFREIEM ELEKTROLYT
MATÉRIAU ACTIF D'ÉLECTRODE POSITIVE, SON PROCÉDÉ DE PRODUCTION ET BATTERIE RECHARGEABLE À ÉLECTROLYTE NON AQUEUX

(30) Priority: 25.03.2022 JP 2022050411
(43) Date of publication of application: 08.01.2025
(73) Proprietor: Aichi Steel Corporation, Tokai-shi, Aichi 476-8666 (JP)
(72) Inventor: FUKAGAWA, Toshiaki, Tokai-shi, Aichi 476-8666 (JP); USAMI, Takeshi, Tokai-shi, Aichi 476-8666 (JP)
(74) Representative: Kramer Barske Schmidtchen Patentanwälte PartG mbB
(86) International application number: PCT/JP2023/004816
(87) International publication number: WO 2023/181703

(56) References cited:
- WO-A1-2008/081839
- JP-A- 2015 176 644
- JP-A- 2017 004 941
- JP-A- 2021 068 556
- US-A1- 2015 243 980

## Description

### TECHNICAL FIELD

The present invention relates to a positive electrode active material, a method for producing the same, and a nonaqueous electrolyte secondary battery.

### BACKGROUND ART

A nonaqueous electrolyte secondary battery such as a lithium-ion secondary battery has excellent properties such as a high electromotive force and a high energy density while being small and lightweight. Taking advantage of these excellent properties, the lithium-ion secondary battery is used in a wide range of applications such as small electronic devices such as mobile phones and laptop computers, and large electric drive devices such as electric vehicles and hybrid vehicles.

As a positive electrode of the lithium-ion secondary battery, a positive electrode active material containing Co (cobalt) is often used from the viewpoint of enhancing various battery properties such as a discharge capacity and discharge rate characteristics. For example, Patent Literature 1 describes a positive active material for a nonaqueous electrolyte secondary battery, which contains a Li₂MnO₃-LiMO₂ solid solution having a specific crystal structure including an O2 structure and an O3 structure and represented by the general formula LiₓNa_{y}[Li_{z1}Mn_{z2}M*_{(1 - z1 - z2)}]O_{(2 ± γ)} {0.67 < x < 1.1, 0 < y < 0.1, 0 < z1 < 0.33, 0.5 < z2 < 0.95, 0 ≤ γ <0.1, and M* represents two or more metal elements including at least Ni or Co}.

### PRIOR ART LITERATURE

### Patent Literature

Patent Literature 1: Japanese Patent No. 6531936

### SUMMARY OF INVENTION

### PROBLEMS TO BE SOLVED BY INVENTION

In order to increase the discharge capacity of a secondary battery, it is desirable to increase a voltage during charging. However, the O3 structure included in the positive electrode active material of Patent Literature 1 may transition to a spinel structure when the voltage during charging is increased. Therefore, charge-discharge characteristics may be deteriorated in the case of charging at a high voltage. In addition, Co used in the positive electrode active material of Patent Literature 1 is an element having a small amount of deposit as a resource despite being an element having a high industrial demand, and is an expensive element. Thus, a positive electrode active material having a high discharge capacity and excellent discharge rate characteristics without Co has been demanded.

The present invention has been made in view of such a background, and is directed to providing a positive electrode active material which allows charging at a high voltage, does not contain Co, has a high discharge capacity, and is excellent in discharge rate characteristics, a method for producing the same, and a nonaqueous electrolyte secondary battery using the positive electrode active material.

### MEANS FOR SOLVING PROBLEM

One aspect of the present invention is a positive electrode active material for use in a nonaqueous electrolyte secondary battery, the positive electrode active material including
an O2-type layered structure attributable to space group P6₃mc as a main phase; and
a composition represented by a composition formula LiₐNa_{b}Mn_{c}M_{d}O_{(2 ± α)}, in the composition formula, M represents one or more additive elements selected from the group consisting of Ni, Al, Ti, Sn, Zr, Nb, W, and Mo, the additive elements including at least Ni, and a to d and α satisfy 0.7 ≤ a ≤ 1.33, 0 < b < 0.1, 0.7 < c < 0.9, 0.9 < c + d <1.1, 4 ≤ c/d ≤ 12, and 0 ≤ α ≤ 0.3.

Another aspect of the present invention is a nonaqueous electrolyte secondary battery including a positive electrode, a negative electrode, and a nonaqueous electrolyte, wherein
the positive electrode contains the positive electrode active material according to the above aspect.

Still another aspect of the present invention is a method for producing the positive electrode active material according to the above aspect, the method including:
preparing an Na-doped precursor which has a crystal phase having a P2-type layered structure attributable to space group P6₃/mmc and contains Na, Mn, and an additive element M; and
then, substituting an Na atom in the Na-doped precursor with an Li atom by ion exchange.

### EFFECTS OF INVENTION

The positive electrode active material has the composition represented by the specific composition formula. In addition, the main phase of the positive electrode active material has the O2-type layered structure attributable to space group P6₃mc. The crystal structure of the O2-type layered structure is stable even in a case of charging at a high voltage, and thus charging can be performed at a high voltage. In addition, the positive electrode active material having the specific composition and the specific crystal structure does not contain Co and has a high discharge capacity. Furthermore, the positive electrode active material has excellent discharge rate characteristics, and can further reduce a difference between a discharge capacity when discharging at a high current density and a discharge capacity when discharging at a low current density.

Further, the positive electrode active material is used for the positive electrode of the nonaqueous electrolyte secondary battery (hereinafter, referred to as "secondary battery".). Therefore, the secondary battery can be charged at a high voltage, has a high discharge capacity, and has excellent discharge rate characteristics.

In the method for producing the positive electrode active material, first, an Na-doped precursor having the specific crystal structure is prepared. Thereafter, an Na (sodium) atom in the Na-doped precursor is substituted with an Li (lithium) atom by ion exchange, so that the positive electrode active material can be easily prepared.

As described above, according to the aspects, it is possible to provide a positive electrode active material which allows charging at a high voltage, does not contain Co, has a high discharge capacity, and is excellent in discharge rate characteristics, a method for producing the same, and a nonaqueous electrolyte secondary battery using the positive electrode active material.

### BRIEF DESCRIPTION OF DRAWINGS

Fig. 1 is an explanatory diagram showing an example of an X-ray diffraction pattern of an Na-doped precursor used for preparing a positive electrode active material.
Fig. 2 is an explanatory diagram showing X-ray diffraction patterns of an active material S1 and an active material R1 in Example 1.
Fig. 3 is an explanatory diagram showing X-ray diffraction patterns of an active material S5 and an active material S8 in Example 1.
Fig. 4 is a developed view illustrating an internal structure of a secondary battery for evaluation in Example 1.
Fig. 5 is an explanatory diagram showing a relationship between a value of c/d and a discharge capacity in active materials S1 to S12 and an active material R4 of Example 1.
Fig. 6 is an explanatory diagram showing a relationship between the value of c/d and a discharge capacity ratio in the active materials S1 to S12 and the active material R4 of Example 1.
Fig. 7 is an explanatory diagram showing a relationship between a content of Na and a discharge capacity in the active materials S1 to S12 and the active material R4 of Example 1.
Fig. 8 is a cross-sectional view illustrating a main part of an all-solid-state secondary battery in Example 2.

### MODE FOR CARRYING OUT INVENTION

### Positive Electrode Active Material

The positive electrode active material has a composition represented by a composition formula LiₐNa_{b}Mn_{c}M_{d}O_{(2 ± α)}, in the composition formula, M represents one or more additive elements selected from the group consisting of Ni, Al, Ti, Sn, Zr, Nb, W, and Mo, the additive elements including at least Ni, and a to d and α satisfy 0.7 ≤ a ≤ 1.33, 0 < b < 0.1, 0.7 < c < 0.9, 0.9 < c + d <1.1, 4 ≤ c/d ≤ 12, and 0 ≤ α ≤ 0.3. In addition, the positive electrode active material includes an O2-type layered structure attributable to space group P6₃mc, as a main phase.

The positive electrode active material having the specific composition formula and the O2-type layered structure as the main phase has a high discharge capacity. In addition, the O2-type layered structure has high stability of the crystal structure, and thus is less likely to change to a crystal structure having poor charge/discharge characteristics such as a spinel structure even in the case of charging at a high voltage. Therefore, the positive electrode active material in which the main phase has an O2-type layered structure can curtail a decrease in charge/discharge capacity due to a change of the crystal structure even in a case of charging at a higher charge voltage. Furthermore, according to this positive electrode active material, it can also be expected that charge/discharge cycle characteristics are improved.

The "main phase" described above refers to a crystal phase having the highest content among crystal phases contained in the positive electrode active material. The content of each crystal phase in the positive electrode active material can be calculated, for example, based on an X-ray diffraction pattern obtained by a powder X-ray diffraction method.

The value of a in the composition formula, that is, the ratio of the number of moles of Li to the total number of moles of Li (lithium), Na (sodium), Mn (manganese), the additive element M, and O (oxygen) is 0.7 or more and 1.33 or less. In this way, the discharge capacity of the positive electrode can be improved easily. In the case where the value of a in the composition formula is less than 0.7, the amount of Li atoms serving as charge carriers is insufficient, which may cause a decrease in discharge capacity. On the other hand, in the case where the value of a in the composition formula is more than 1.33, the stability of the O2-type layered structure in the positive electrode active material is deteriorated, and a crystal phase having a crystal structure other than the O2-type layered structure is easily formed. As a result, the crystal phase having the crystal structure other than the O2-type layered structure may become a main phase.

The value of b in the composition formula of the positive electrode active material, that is, the ratio of the number of moles of Na to the total number of moles of Li, Na, Mn, the additive element M, and O is more than 0 and less than 0.1. By doping the positive electrode active material with a trace amount of Na, the discharge capacity and discharge rate characteristics of the positive electrode active material can be easily improved. From the viewpoint of more reliably achieving these operation and effects, the value of b in the composition formula is preferably 0.001 or more, more preferably 0.02 or more, and still more preferably 0.03 or more.

On the other hand, when the content of Na in the positive electrode active material is excessively large, the discharge capacity may be lowered. By setting the value of b in the composition formula to less than 0.1, preferably 0.095 or less, and more preferably 0.07 or less, such a problem can be easily avoided. From the viewpoint of further increasing the discharge capacity in the positive electrode active material, the value of b in the composition formula is preferably 0.001 or more and 0.095 or less, more preferably 0.001 or more and 0.07 or less, and still more preferably 0.03 or more and 0.07 or less.

The reason why such operation and effect are obtained by doping of Na is considered to be, for example, as follows. That is, Na⁺ has a larger ionic radius than that of Li⁺. Therefore, it is considered that when a trace amount of Na is doped into the positive electrode active material, a diffusion path of Li in the positive electrode active material is expanded. It is considered that as a result of Li easily diffusing in the positive electrode active material, the discharge capacity of the positive electrode active material can be improved.

The positive electrode active material contains one or more kinds of additive elements M. The additive elements M include at least Ni (nickel). In addition to Ni, the additive elements M may include one or more elements of Al (aluminum), Ti (titanium), Sn (tin), Zr (zirconium), Nb (niobium), W (tungsten), and Mo (molybdenum).

The value of c in the composition formula, that is, the ratio of the number of moles of Mn to the total number of moles of Li, Na, Mn, the additive element M, and O is more than 0.7 and less than 0.9. The value of d in the composition formula, that is, the ratio of the number of moles of the additive element M to the total number of moles of Li, Na, Mn, the additive element M, and O is set such that the sum of the value of c and the value of d in the composition formula is 0.9 or more and 1.1 or less, and the ratio c/d of the value of c to the value of d is 4 or more and 12 or less.

By setting the sum of the value of c and the value of d and the ratio c/d of the value of c to the value of d in the composition formula to the above-described specific ranges, the stability of the O2-type layered structure in the positive electrode active material can be enhanced, and the main phase of the positive electrode active material can have the O2-type layered structure. In the case where at least one of the sum of the value of c and the value of d and the ratio c/d of the value of c to the value of d in the composition formula is out of the specific range, the stability of the O2-type layered structure in the positive electrode active material decreases, and a crystal phase having a crystal structure other than the O2-type layered structure is easily formed. As a result, the crystal phase having the crystal structure other than the O2-type layered structure may become a main phase.

In addition, by setting the value of c in the composition formula to the specific range, a part of Mn in the crystal lattice of the O2-type layered structure can be substituted with the additive element M. As a result, it is possible to easily improve the discharge capacity of the positive electrode active material.

The reason why such operation and effect are obtained by substitution of Mn is considered to be, for example, as follows. That is, the aforementioned additive element M has an ionic radius larger than that of Mn, and thus, when a part of Mn in the positive electrode active material is substituted with the additive element M, the length of the a-axis in the crystal lattice of the O2-type layered structure can be increased. It is considered that when the length of the a-axis is increased as described above, diffusion of Li atoms between a lithium layer and a lithium-containing transition metal layer in the O2-type layered structure is promoted. It is considered that as a result of Li easily diffusing in the positive electrode active material, the discharge capacity of the positive electrode active material can be improved.

The ratio c/d of the value of c to the value of d in the composition formula is preferably 5 or more and 10 or less. In this case, it is possible to further increase the discharge capacity of the positive electrode active material and further improve the discharge rate characteristics, so that it is possible to further reduce a difference between a discharge capacity when discharging at a high current density and a discharge capacity when discharging at a low current density.

The positive electrode active material more preferably has a composition in which the value of b (that is, the Na content) in the composition formula satisfies 0.001 ≤ b ≤ 0.07, and the ratio c/d of the value of c to the value of d is 5 or more and 10 or less. In this case, the discharge capacity itself can be further improved while achieving the above-described effect of improving the discharge rate characteristics. From the viewpoint of further enhancing such operation and effect, the positive electrode active material more preferably has a composition in which the value of b in the composition formula satisfies 0.03 ≤ b ≤ 0.07, and the ratio c/d of the value of c to the value of d is 5 or more and 10 or less.

The value of 2 ± α in the composition formula, that is, the ratio of the number of moles of O to the total number of moles of Li, Na, Mn, the additive element M, and O is 1.7 or more and 2.3 or less. Due to this configuration, the stability of the O2-type layered structure in the positive electrode active material is enhanced, so that the main phase of the positive electrode active material can have the O2-type layered structure. In the case where the value of α in the composition formula is more than 0.3, the stability of the O2-type layered structure in the positive electrode active material decreases, and a crystal phase having a crystal structure other than the O2-type layered structure is easily formed. As a result, the crystal phase having the crystal structure other than the O2-type layered structure may become a main phase.

The positive electrode active material is usually used in a powder state from the viewpoint of further shortening the diffusion distance of lithium ions in the positive electrode active material. The positive electrode active material is preferably composed of particles having a particle size of 10 µm or less. That is, the positive electrode active material may be, for example, a powder having a particle size distribution in which the maximum particle size is 10 µm or less, or an aggregate of primary particles having a particle size of 10 µm or less. In this case, the diffusion distance of lithium ions in the positive electrode active material can be further shortened, and the internal resistance in the nonaqueous electrolyte secondary battery can be more easily reduced. From the viewpoint of further shortening the diffusion distance of lithium ions in the positive electrode active material, the positive electrode active material is preferably composed of primary particles having a particle size of 1 µm or less.

The particle size of the positive electrode active material described above can be measured based on an enlarged photograph obtained by observing the positive electrode active material with a scanning electron microscope (SEM). More specifically, for 50 or more particles of the positive electrode active material randomly selected from the enlarged photograph observed with the SEM, a circumscribed circle for each particle is determined, and a diameter thereof is taken as the particle size of each particle. The maximum value of these particle sizes is taken as the particle size of the positive electrode active material.

### Method for Producing Positive Electrode Active Material

The positive electrode active material is obtained, for example, by preparing an Na-doped precursor which has a crystal phase having a P2-type layered structure attributable to space group P6₃/mmc and contains Na, Mn, and an additive element M, and
then, substituting an Na atom in the Na-doped precursor with an Li atom by ion exchange.

As a method for preparing the Na-doped precursor, for example, a coprecipitation method can be adopted. In a case where the positive electrode active material is prepared by the coprecipitation method, first, a first solution containing Mn ion, Ni ion, and ions of an additive element M other than Ni to be added as necessary, and an alkaline second solution are prepared. The first solution can be prepared, for example, by dissolving a nitrate, a sulfate, a hydroxide, a carbonate, or the like of the metal elements described above in water. It is sufficient to appropriately set the concentration of each ion in the first solution corresponding to a desired composition in the positive electrode active material. As the second solution, for example, an aqueous solution of a base such as sodium carbonate or sodium hydroxide can be used.

Next, the first solution and the second solution prepared in this manner are mixed. As a result, a precipitate containing Mn, Ni, and the additive element M is formed in the mixed liquid of the first solution and the second solution. For example, when an aqueous carbonate solution of sodium carbonate or the like is used as the second solution, a carbonate containing Mn, Ni, and the additive element M is formed in the mixed liquid of the first solution and the second solution. When the first solution and the second solution are mixed, as necessary, an alkaline third solution may be added to the mixed liquid of the first solution and the second solution to adjust the formation rate of the precipitate. As the third solution, for example, ammonia water or the like can be used.

The precipitate preferably has a composition represented by a composition formula MnₑM_{f}CO₃ (in the composition formula, M represents one or more additive elements selected from the group consisting of Ni, Al, Ti, Sn, Zr, Nb, W, and Mo, the additive elements including at least Ni, and e and f satisfy e + f = 1, 4 ≤ e/f ≤ 12). By forming a precipitate having such a composition in the production process of the positive electrode active material, the content of the O2-type layered structure in the finally obtained positive electrode active material can be further increased.

Next, the precipitate formed in the mixed liquid and a compound serving as an Na source are mixed to prepare a mixture. At this time, a compound serving as an Li source may be added to the mixture as necessary. It is sufficient to appropriately set the ratio of the precipitate, the compound serving as an Na source, and the compound serving as an Li source corresponding to the desired composition of the positive electrode active material. As the compound serving as an Na source, for example, sodium carbonate, sodium oxide, sodium nitrate, sodium hydroxide, or the like can be used. As the compound serving as an Li source, for example, lithium carbonate or the like can be used.

When the mixture thus obtained is sintered in an oxidizing gas atmosphere, an Na-doped precursor having a P2-type layered structure as a main phase can be obtained. As the oxidizing gas, for example, atmospheric air or the like can be used. In the case where the sintering temperature during sintering is too low, the P2-type layered structure is not sufficiently formed in the Na-doped precursor. On the other hand, when the sintering temperature during sintering is too high, a crystal phase having a crystal structure other than the P2-type layered structure is easily formed in the Na-doped precursor.

From the viewpoint of more easily obtaining the Na-doped precursor having a P2-type layered structure as a main phase, the sintering temperature during sintering is preferably 700 to 1100°C. The sintering temperature during sintering is more preferably 800 to 1000°C. In this case, an Na-doped precursor having only a P2-type layered structure can be more easily obtained. The holding time during sintering can be appropriately set from a range of 0.5 to 50 hours.

The contents of Mn, the additive element M, and O in the Na-doped precursor are the same as the contents of Mn, the additive element M, and O in the desired positive electrode active material, and the total of the contents of Li and Na in the Na-doped precursor is the same as the total of the contents of Li and Na in the desired positive electrode active material. The content of Na in the Na-doped precursor is preferably higher than the content of Li. In other words, the Na-doped precursor preferably has, for example, a composition represented by a composition formula NaₓLi_{y}Mn_{c}M_{d}O_{(2 ± α)}, in the composition formula, M represents one or more additive elements selected from the group consisting of Ni, Al, Ti, Sn, Zr, Nb, W, and Mo, the additive elements including at least Ni, and x, y, c, d, and α satisfy 0.5 ≤ x ≤ 1., 0 ≤ y ≤ 0.33, 0.7 < c < 0.9, 0.9 < c + d <1.1, 4 ≤ c/d ≤ 12, and 0 ≤ α ≤ 0.3.

The content of the crystal phase having the P2-type layered structure in the Na-doped precursor is preferably 50 mass% or more, more preferably 85 mass% or more, still more preferably 90 mass% or more, particularly preferably 95 mass% or more, and most preferably 100 mass%, that is, the Na-doped precursor composed only of the crystal phase having the P2-type layered structure is most preferable. By increasing the content of the crystal phase having the P2-type layered structure, the content of the crystal phase having the O2-type layered structure can be easily increased in the finally obtained positive electrode active material.

The content of the P2-type layered structure in the Na-doped precursor described above can be calculated, for example, based on an X-ray diffraction pattern obtained by a powder X-ray diffraction method.

After the Na-doped precursor is obtained as described above, Na atom in the Na-doped precursor is substituted with Li atom by ion exchange. A specific method of the ion exchange is not particularly limited, but for example, a method of heating the Na-doped precursor and the Li ion source in contact with each other can be adopted. In this case, as the Li ion source, a lithium salt such as lithium chloride or lithium nitrate can be used. A temperature at which the Li ion source is melted is sufficient for the heating temperature during ion exchange.

In a case where a mixture of lithium salts is used as the Li ion source, the heating temperature during ion exchange is preferably 400°C or lower. In this case, formation of an O3-type layered structure can be curtailed. From the viewpoint of further increasing the content of the O2-type layered structure in the positive electrode active material, the heating temperature during ion exchange is more preferably 350°C or lower. The heating time during ion exchange can be appropriately set from a range of 0.5 to 8 hours.

The Na atom in the Na-doped precursor can also be substituted with Li atom by bringing the aqueous solution containing Li ion into contact with the Na-doped precursor. At this time, as necessary, an aqueous solution containing Li ion may be warmed to promote ion exchange. As the aqueous solution to be brought into contact with the Na-doped precursor, an aqueous solution of a lithium salt such as lithium chloride or lithium nitrate can be used. The concentration of Li ion in the aqueous solution can be appropriately set, for example, from a range of 1 to 10 mol%. The time for bringing the Na-doped precursor into contact with the aqueous solution can be appropriately set, for example, from a range of 10 to 300 hours.

The positive electrode active material can be obtained by substituting Na ion in the Na-doped precursor with Li ion as described above. After the ion exchange is completed, the obtained positive electrode active material may be crushed into a powder form as necessary. The method for crushing the fired body is not particularly limited. For example, as the crushing method, various methods such as hand grinding with a mortar and mechanical grinding with a ball mill or the like can be adopted. In addition, after the sintered body is crushed, the powder may be classified as necessary to adjust the particle size of the positive electrode active material.

### Nonaqueous Electrolyte Secondary Battery

The positive electrode active material is configured to be able to use in a positive electrode of a nonaqueous electrolyte secondary battery including a positive electrode, a negative electrode, and a nonaqueous electrolyte and using a lithium ion as a charge carrier. The nonaqueous electrolyte in the nonaqueous electrolyte secondary battery using the positive electrode active material may be a liquid or a solid. That is, examples of the nonaqueous electrolyte secondary battery to which the positive electrode active material can be applied include a secondary battery using a nonaqueous electrolytic solution such as a lithium-ion secondary battery, and an all-solid-state secondary battery using a solid electrolyte with a lithium ion as a charge carrier.

The lithium-ion secondary battery can include, as main constituent members, a positive electrode containing the positive electrode active material, a negative electrode, a separator interposed between the positive electrode and the negative electrode, a nonaqueous electrolytic solution, an additive, a case for housing them, and the like. Examples of the shape of the lithium-ion secondary battery include a coin type, a cylindrical type, a laminated type, and a prismatic type.

The positive electrode of the lithium-ion secondary battery includes a positive electrode active material and a positive electrode current collector holding the positive electrode active material. As the positive electrode current collector, for example, various conductors such as metal foils including a copper foil, stainless steel mesh, an aluminum foil, a nickel foil and the like, a punching metal, an expanded metal, or a metal mesh can be used.

The positive electrode may contain a binder interposed between the positive electrode active material and the positive electrode current collector. Examples of the binder include fluorine-based binders such as polyvinylidene fluoride and polytetrafluoroethylene, rubber-based binders such as styrene butadiene rubber, olefin-based binders such as polypropylene and polyethylene, and cellulose-based binders such as carboxymethyl cellulose.

In addition, the positive electrode may contain a conductive agent or a conductive assistant for enhancing electrical conductivity. As the conductive agent, for example, graphite, carbon black, acetylene black, cokes, or the like can be used.

The positive electrode can be prepared, for example, by the following method. First, a paste-like positive electrode mixture containing a positive electrode active material is prepared. The positive electrode mixture may contain an organic solvent for dispersing or dissolving a solid content such as the positive electrode active material as necessary. Next, the positive electrode mixture is applied onto the surface of a positive electrode current collector and then dried to form a positive electrode active material layer on the surface of the positive electrode current collector. After the positive electrode active material layer is formed, the positive electrode active material layer may be pressed to increase the density of the positive electrode active material layer, as necessary. Thus, the positive electrode can be obtained.

The negative electrode of the lithium-ion secondary battery includes a negative electrode active material and a negative electrode current collector holding the negative electrode active material. As the negative electrode active material, for example, a silicon-based active material such as Si, an Si alloy, or silicon oxide, a carbon material having a graphite structure such as graphite or hard carbon, a lithium-based oxide such as lithium titanate (Li₄Ti₅O₁₂), metal lithium, a lithium alloy, or the like can be used. As the negative electrode current collector, the same conductor as the positive electrode current collector described above can be used.

Similarly to the positive electrode, the negative electrode may contain a binder, a conductive agent, and a conductive assistant. The binder, the conductive agent, and the conductive assistant that can be used for the negative electrode are the same as those for the positive electrode.

The method for preparing the negative electrode is the same as that for producing the positive electrode. That is, first, a paste-like negative electrode mixture containing a negative electrode active material is prepared. The negative electrode mixture may contain an organic solvent for dispersing or dissolving a solid content such as the negative electrode active material as necessary. Next, the negative electrode mixture is applied onto the surface of a negative electrode current collector and then dried to form a negative electrode active material layer on the surface of the negative electrode current collector. After the negative electrode active material layer is formed, the negative electrode active material layer may be pressed to increase the density of the negative electrode active material layer, as necessary. Thus, the negative electrode can be obtained.

The nonaqueous electrolytic solution can contain an organic solvent and an electrolyte composed of a lithium salt. Examples of the lithium salt include LiPF₆. As the organic solvent, ethylene carbonate, dimethyl carbonate, ethyl methyl carbonate, monofluoroethylene carbonate, methyl-2,2,2-trifluoroethyl carbonate, or the like can be used. One of these organic solvents may be used alone, or two or more kinds thereof may be used in combination.

The nonaqueous electrolytic solution preferably contains at least one organic solvent of ethylene carbonate, dimethyl carbonate, and ethyl methyl carbonate. These organic solvents have high polarity and can dissolve a large amount of electrolyte. Therefore, by preparing the nonaqueous electrolytic solution with these organic solvents, the transport number of charge carriers in the lithium-ion secondary battery can be easily increased.

The all-solid-state secondary battery can include, as main constituent members, a positive electrode containing the positive electrode active material, a negative electrode containing a negative electrode active material, a separator interposed between the positive electrode and the negative electrode and including a solid electrolyte, and a case for housing them, and the like, for example.

The positive electrode of the all-solid-state secondary battery may include, for example, a positive electrode active material, a solid electrolyte, and an additive such as a conductive agent added as necessary. In this case, from the viewpoint of further increasing the energy density of the secondary battery, the content of the positive electrode active material in the positive electrode is preferably 60 to 99 mass%, and more preferably 70 to 95 mass%.

As the solid electrolyte used for the positive electrode of the all-solid-state secondary battery, for example, an oxide solid electrolyte such as lithium lanthanum zirconate, LiPON, Li_{1 + X}Al_{X}Ge_{2 - X}(PO4)₃, Li-SiO-based glass, or Li-Al-S-O-based glass, or a sulfide solid electrolyte such as Li₂S-P₂S₅, Li₂S-SiS₂, LiI-Li₂S-SiS₂, LiI-Si₂S-P₂S₅, Li₂S-P₂S₅-LiI-LiBr, LiI-Li₂S-P₂S₅, LiI-Li₂S-P₂O₅, LiI-Li₃PO₄-P₂S₅, or Li₂S-P₂S₅-GeS₂ can be used. The content of the solid electrolyte in the positive electrode is preferably 1 to 40 mass%, and more preferably 5 to 30 mass%.

In the case where the conductive agent and the conductive assistant are added to the positive electrode, the contents of the conductive agent and the conductive assistant can be appropriately set depending on electrical conductivity, ionic conductivity, and desired energy density of the secondary battery. The additive used for the positive electrode of the all-solid-state secondary battery is the same as the additive used for the positive electrode of the lithium-ion secondary battery.

The negative electrode of the all-solid-state secondary battery may include, for example, a negative electrode active material, a solid electrolyte, and an additive such as a conductive agent added as necessary. The negative electrode active material and the additive used for the negative electrode of the all-solid-state secondary battery are the same as the negative electrode active material and the additive used for the negative electrode of the lithium-ion secondary battery. The solid electrolyte used for the negative electrode is the same as the solid electrolyte used for the positive electrode described above.

The separator of the all-solid-state secondary battery contains a solid electrolyte. The solid electrolyte used for the separator is the same as the solid electrolyte used for the positive electrode described above. In addition to the solid electrolyte, the separator may contain a binder for binding particles of the solid electrolyte to each other as necessary. As the binder, for example, a fluorine-containing resin such as polyvinylidene fluoride, polytetrafluoroethylene, or fluororubber, or thermoplastic resins such as polypropylene, polyethylene, or polyethylene terephthalate can be used.

### Examples

### Example 1

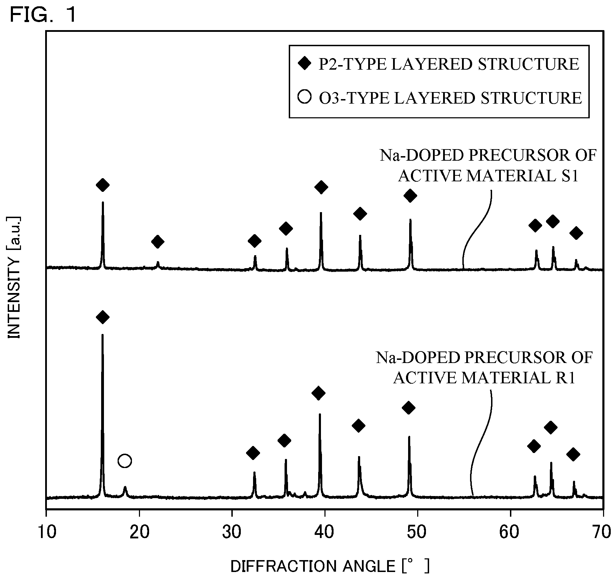

In the present example, an example of the positive electrode active material will be described with reference to Figs. 1 to 7. The positive electrode active materials of the present example (Table 1, active materials S1 to S12) each have a composition represented by a composition formula LiₐNa_{b}Mn_{c}M_{d}O_{(2 ± α)}, in the composition formula, M represents one or more additive elements selected from the group consisting of Ni, Al, Ti, Sn, Zr, Nb, W, and Mo, the additive elements including at least Ni, and a to d and α satisfy 0.7 ≤ a ≤ 1.33, 0 < b < 0.1, 0.7 < c < 0.9, 0.9 < c + d <1.1, 4 ≤ c/d ≤ 12, and 0 ≤ α ≤ 0 3. In addition, the main phases of the positive electrode active materials each have the O2-type layered structure attributable to space group P6₃mc.

A method for producing the positive electrode active materials of the present example is as follows. First, manganese sulfate pentahydrate as a Mn source and nickel sulfate hexahydrate as a Ni source were weighed in such a manner that the ratio c/d of the value of c to the value of d in the composition formula was the value shown in Table 1. These compounds were dissolved in distilled water to prepare a first solution. In addition, separately from the first solution, an aqueous sodium carbonate solution having a concentration of 0.5 mol/L was prepared and used as a second solution.

Next, the first solution and the second solution were simultaneously dropped into a beaker to form a precipitate containing Mn and Ni in the beaker. At this time, the dropping rates of the first solution and the second solution were adjusted in such a manner that the pH of the mixed liquid in the beaker was within a range of 7 to 9. After the dropping of the first solution and the second solution was completed, the mixed liquid in the beaker was warmed to 50°C and stirred at a rotation speed of 500 rpm for 1 hour. After stirring was complete, the precipitate was taken out from the beaker and washed with distilled water. The precipitate after washing was dried at a temperature of 100°C for 24 hours and then crushed using an agate mortar.

The powdery precipitate obtained as described above was mixed with sodium carbonate and lithium carbonate at a molar ratio of sodium carbonate : lithium carbonate of 4 : 1. This mixture was heated and sintered at a temperature of 800°C for 8 hours to obtain an Na-doped precursor. The obtained Na-doped precursor was crushed using an agate mortar to form a powder.

The Na-doped precursor thus obtained is composed of a crystal phase having a P2-type layered structure. As an example of the X-ray diffraction pattern of the Na-doped precursor, Fig. 1 shows the X-ray diffraction patterns of an Na-doped precursor used for preparing the active material S1 and an Na-doped precursor used for producing an active material R1. As an X-ray diffractometer, "SmartLab (registered trademark)" manufactured by Rigaku Corporation was used, the characteristic X-ray irradiated was a CuKα ray, an X-ray tube voltage was 40 kV, and an irradiation current was 20 mA. In Fig. 1, the vertical axis represents a diffraction intensity (relative intensity), and the horizontal axis represents a diffraction angle 2θ (unit: °).

According to Fig. 1, it can be understood that only the diffraction peak derived from the P2-type layered structure appears in the X-ray diffraction pattern of the Na-doped precursor to be the active material S1. On the other hand, in the Na-doped precursor to be the active material R1, a minute diffraction peak derived from the O3-type layered structure appeared in addition to the diffraction peak derived from the P2-type layered structure.

Next, lithium nitrate and lithium chloride were mixed at a molar ratio of lithium nitrate : lithium chloride of 88 : 12 to prepare a Li salt mixture. The Li salt mixture and the Na-doped precursor were mixed at a molar ratio of 10 : 1, and then heated to a temperature of 280°C for 0.5 to 8 hours in the air to perform ion exchange. The reaction product after the completion of ion exchange was washed with distilled water, then dried, and then crushed using an agate mortar to obtain a positive electrode active material (active materials S1 to S12) shown in Table 1.

In the present example, active materials R1 to R4 shown in Table 1 were prepared for comparison with the active materials S1 to S12. The active materials R1 to R4 have the composition shown in Table 1 and contain the crystal phase shown in Table 1. The method for producing the active materials R1 to R4 is the same as the method for producing the active materials S1 to S12 except that the kinds and ratios of raw materials are changed so as to have the composition shown in Table 1.

Next, the composition and crystal structure of the positive electrode active materials shown in Table 1 were identified.

### · Composition of Positive Electrode Active Material

The molar ratio of each metal element in the positive electrode active materials was measured by inductively coupled plasma atomic emission spectrometry (that is, ICP-AES). The compositions of the active materials S1 to S12 and the active materials R1 to R4 were as shown in the column of "Composition of positive electrode active material" in Table 1.

### · Crystal Structure of Crystal Phase Contained in Positive Electrode Active Material

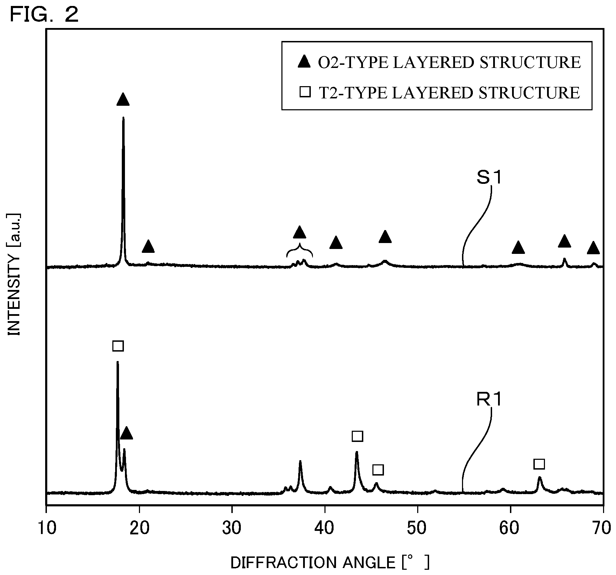

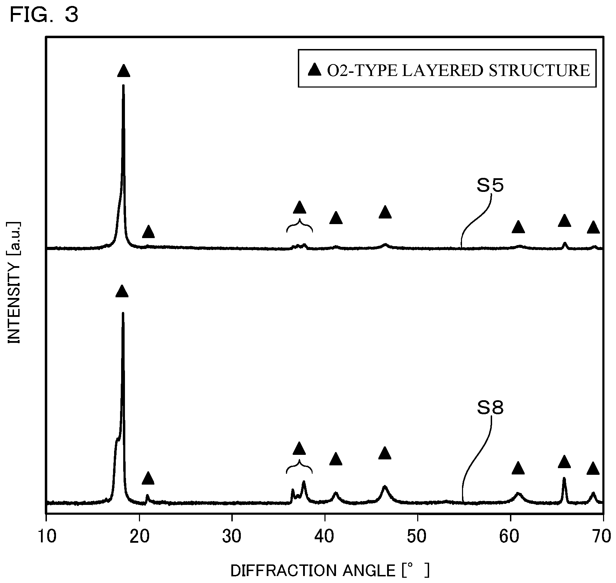

Crystal phases contained in the active materials S1 to S12 and the active materials R1 to R4 were identified by powder X-ray diffraction. The measuring apparatus and the measurement conditions used for the powder X-ray diffraction are the same as those of the powder X-ray diffraction of the Na-doped precursor described above. As an example of the X-ray diffraction pattern of the positive electrode active material, the X-ray diffraction patterns of the active material S1 and the active material R1 are shown in Fig. 2, and the X-ray diffraction patterns of the active material S5 and the active material S8 are shown in Fig. 3. In Figs. 2 and 3, the vertical axis represents a diffraction intensity (relative intensity), and the horizontal axis represents a diffraction angle 2θ (unit: °).

Based on the obtained X-ray diffraction patterns, the crystal phase contained in each positive electrode active material was identified, and as shown in Fig. 2, Fig. 3, and Table 1, it was confirmed that the active materials S1 to S12 and the active materials R2 to R4 were composed of a crystal phase having an O2-type layered structure. As shown in Fig. 3, in the positive electrode active material having a relatively high Na content, a diffraction peak derived from Na remaining after ion exchange appeared on the lower angle side from the diffraction peak having the highest intensity.

On the other hand, as shown in Fig. 2 and Table 1, it was confirmed that the main phase of the active material R1 was a T2-type layered structure, and the O2-type layered structure was included as a minor phase.

### · Configuration and Preparation Method of Secondary Battery for Evaluation

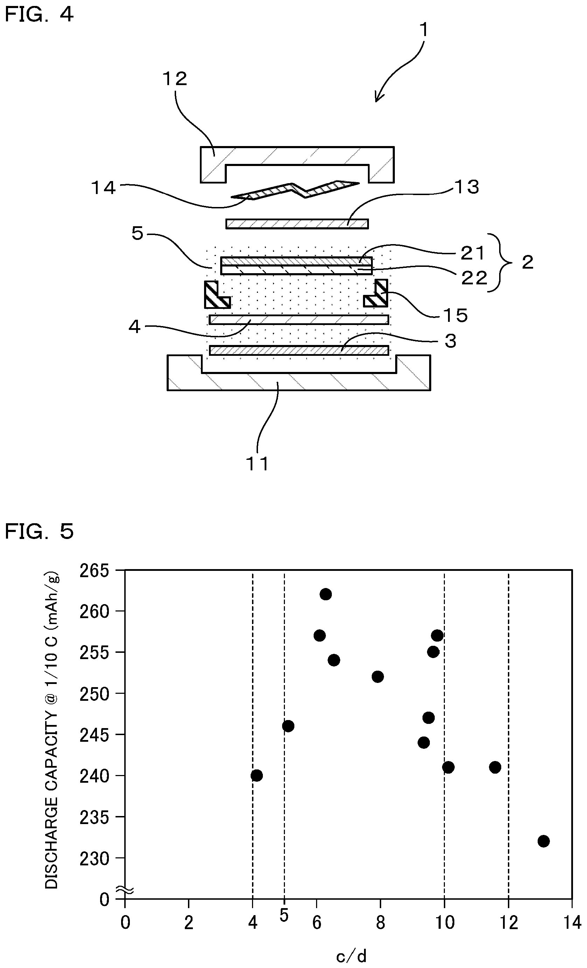

Next, a secondary battery for evaluation was prepared using the obtained positive electrode active material. As shown in Fig. 4, a secondary battery 1 of the present example is a CR2032 type coin battery including a positive electrode 2, a counter electrode 3, a separator 4, and a nonaqueous electrolytic solution 5.

More specifically, as illustrated in Fig. 4, the secondary battery 1 includes a case 11 having a relatively small height and a bottomed cylindrical shape, and an upper lid 12 that closes an opening of the case 11. A space is formed between the case 11 and the upper lid 12. The upper lid 12 is joined to the case 11 by swaging.

The positive electrode 2, the counter electrode 3, the separator 4, and the nonaqueous electrolytic solution 5 are accommodated in a space between the case 11 and the upper lid 12. A rubber packing 15 is disposed between the positive electrode 2 and the separator 4. A spacer 13 and a washer 14 are provided between the upper lid 12 and the positive electrode 2. The spacer 13 is disposed so as to be in contact with the positive electrode 2. The washer 14 is disposed between the spacer 13 and the upper lid 12. The spacer 13 in the present example is a disk-shaped stainless-steel plate.

The positive electrode 2 includes a positive electrode current collector 21 and a positive electrode active material layer 22 containing any one of the active materials S1 to S12 and the active materials R1 to R4 shown in Table 1 and provided on the positive electrode current collector 21. Specifically, the positive electrode current collector 21 of the present example is a disk-shaped aluminum foil having a diameter of 16 mm. The counter electrode 3 is specifically a disk-shaped metal lithium foil.

The separator 4 is made of polypropylene and is interposed between the positive electrode 2 and the counter electrode 3. The nonaqueous electrolytic solution 5 is filled at least between the positive electrode 2 and the counter electrode 3 in the secondary battery 1. In the nonaqueous electrolytic solution 5 of the present example, LiPF₆ is dissolved at a concentration of 1 mol/L in a mixed solvent obtained by mixing ethylene carbonate, dimethyl carbonate, and ethyl methyl carbonate in the same volume.

Next, a method for producing the secondary battery 1 will be described. First, polyvinylidene fluoride as a binder was dissolved in N-methyl-2-pyrrolidone to prepare a binder solution having a concentration of 12 mass%. In 0.49 g of this binder solution, 1.0 g of a positive electrode active material and 0.1178 g of carbon black as a conductive assistant were added and kneaded to obtain a positive electrode mixture. The positive electrode mixture was applied onto the positive electrode current collector 21 and then dried to form the positive electrode active material layer 22. Thereafter, the positive electrode active material layer 22 was pressed together with the positive electrode current collector 21 using a roll press to increase the density of the positive electrode active material layer 22 to 2.4 to 2.8 g/cm³.

The pressed positive electrode active material layer 22 and the positive electrode current collector 21 were punched into a disk shape having a diameter of 16 mm to obtain the positive electrode 2. In addition, the counter electrode 3 was prepared by punching the lithium foil into a disk shape.

Next, the counter electrode 3, the separator 4, the packing 15, the positive electrode 2, the spacer 13, and the washer 14 were sequentially overlaid inside the case 11, and the nonaqueous electrolytic solution 5 was poured into the case 11. Thereafter, the upper lid 12 was overlaid on the opening of the case 11, and crimping was performed to seal the space between the case 11 and the upper lid 12. Thus, the secondary battery 1 was obtained.

Next, a rate characteristics test was performed using the obtained secondary battery for evaluation. The rate characteristics test was performed using a charge/discharge apparatus ("BCS-815" manufactured by Bio-Logic Science Instruments).

### · Rate characteristics test

First, the secondary battery was charged in a constant current-constant voltage mode at a temperature of 25°C. The current density in the constant current mode was set to 1/10 C, and switching to the constant voltage mode was performed when the voltage of the secondary battery reached 4.8 V. In the constant voltage mode, the charging voltage was set to 4.8 V, and charging was performed until the current value reached 0.01 mA. After the current value in the constant voltage mode reached 0.01 mA, charging and discharging were stopped for 10 minutes to stabilize the potential of the secondary battery. Thereafter, the battery was discharged to 2.0 V at a constant current of a current density of either 1/10 C or 1 C, and a discharge curve at this time was acquired.

Discharge capacities at the respective current densities were calculated based on the discharge curve obtained by the above method, and these values were described in the column of "Discharge capacity" in Table 1. In addition, the ratio of the discharge capacity at the current density of 1 C to the discharge capacity at the current density of 1/10 C was calculated, and this value was described in the column of "Discharge capacity ratio" in Table 1. Note that "C", which is a unit of a current density during charging and discharging, theoretically means a current density at which a charge rate or a discharge rate reaches 100% in one hour. That is, it is theoretically possible to completely discharge the secondary battery by discharging at a current density of 1 C for 1 hour. In the present example, the current density corresponding to 1 C is specifically 250 mA/g.

**[Table 1]**

| | Composition (molar ratio) | | | | | | c/d | Crystal structure | | Discharge capacity (mAh/g) | | Discharge capacity ratio (%) |
|---|---|---|---|---|---|---|---|---|---|---|---|---|
| | Li | Na | Ni | Mn | Co | O | | Main phase | Minor phase | 1/10C | 1C | |
| Active material S1 | 1.020 | 0.004 | 0.190 | 0.785 | - | 2 | 4.1 | O2-type | - | 240 | 130 | 54 |
| Active material S2 | 1.024 | 0.001 | 0.157 | 0.803 | - | 2 | 5.1 | O2-type | - | 246 | 167 | 68 |
| Active material S3 | 1.048 | 0.004 | 0.127 | 0.831 | - | 2 | 6.5 | O2-type | - | 254 | 200 | 79 |
| Active material S4 | 1.076 | 0.010 | 0.108 | 0.854 | - | 2 | 7.9 | O2-type | - | 252 | 177 | 70 |
| Active material S5 | 1.073 | 0.013 | 0.091 | 0.865 | - | 2 | 9.5 | O2-type | - | 247 | 149 | 60 |
| Active material S6 | 1.073 | 0.007 | 0.086 | 0.870 | - | 2 | 10.1 | O2-type | - | 241 | 134 | 56 |
| Active material S7 | 1.035 | 0.009 | 0.076 | 0.880 | - | 2 | 11.6 | O2-type | - | 241 | 126 | 52 |
| Active material S8 | 0.991 | 0.050 | 0.089 | 0.870 | - | 2 | 9.8 | O2-type | - | 257 | 210 | 82 |
| Active material S9 | 0.976 | 0.065 | 0.090 | 0.869 | - | 2 | 9.7 | O2-type | - | 255 | 202 | 79 |
| Active material S10 | 1.044 | 0.034 | 0.130 | 0.792 | - | 2 | 6.1 | O2-type | - | 257 | 205 | 80 |
| Active material S11 | 1.011 | 0.055 | 0.128 | 0.805 | - | 2 | 6.3 | O2-type | - | 262 | 203 | 77 |
| Active material S12 | 0.956 | 0.091 | 0.092 | 0.861 | - | 2 | 9.4 | O2-type | - | 244 | 142 | 58 |
| Active material R1 | 0.944 | 0.005 | 0.342 | 0.709 | - | 2 | 2.1 | T2-type | O2-type | 210 | 76 | 36 |
| Active material R2 | 0.904 | - | - | 0.547 | 0.549 | 2 | - | O2-type | - | 232 | 82 | 35 |
| Active material R3 | 0.997 | 0.031 | - | 0.972 | - | 2 | - | O2-type | - | 139 | 10 | 7 |
| Active material R4 | 1.033 | 0.008 | 0.068 | 0.891 | - | 2 | 13.103 | O2-type | - | 232 | 96 | 41 |

As shown in Table 1, the active materials S1 to S12 each have the specific composition described above. In addition, the main phase of these active materials has an O2-type layered structure. When these active materials were discharged at a current density of 1/10 C, the discharge capacity was higher than that of the active material R2 containing Co. From the comparison between the active materials S1 to S12 and the active material R3 containing neither Co nor the additive element M, it can be understood that the discharge capacity was remarkably improved by substituting a part of Mn in the O2-type layered structure with the additive element M such as Ni.

On the other hand, as shown in Table 1, the main phase of the active material R1 has the T2-type layered structure, and thus, the discharge capacity was lower than that of the active materials S1 to S12 having the O2-type layered structure.

The active material R4 had a large value of c/d, and thus, the effect of the additive element M was insufficient. Thus, the discharge capacity of the active material R4 was lower than that of the active materials S1 to S12.

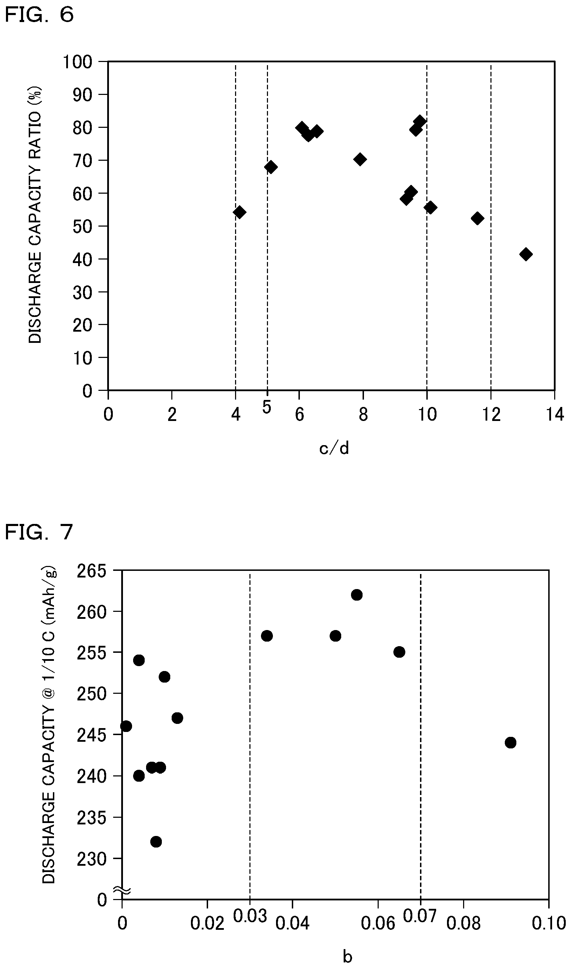

For the active materials S1 to S12 having, as the main phase, an O2-type layered structure and containing Mn and the additive element M, Fig. 5 shows the relationship between the value of c/d and the discharge capacity, and Fig. 6 shows the relationship between the value of c/d and the discharge capacity ratio. In Fig. 5, the horizontal axis represents the value of c/d in the composition formula, and the vertical axis represents the discharge capacity (unit: mAh/g) at the time of discharging at a current density of 1/10 C. In Fig. 6, the horizontal axis represents the value of c/d in the composition formula, and the vertical axis represents the discharge capacity ratio (unit: %).

As shown in Table 1, Fig. 5, and Fig. 6, it can be understood that the active materials S2 to S5 and the active materials S8 to S12 having a value of c/d of 5 or more and 10 or less have a discharge capacity and a discharge capacity ratio higher than those of the other active materials.

Fig. 7 shows a relationship between a content of Na and the discharge capacity in the active materials S1 to S12 and the active material R4. In Fig. 7, the horizontal axis represents the content of Na, that is, the value of b in the composition formula, and the vertical axis represents the discharge capacity (unit: mAh/g) in the case of discharging at a current density of 1/10 C. As shown in Fig. 7, it can be understood that the active materials S8 to S11 in which the molar ratio of Na is 0.03 or more and 0.07 or less have higher discharge capacity than that of the other active materials.

### Example 2

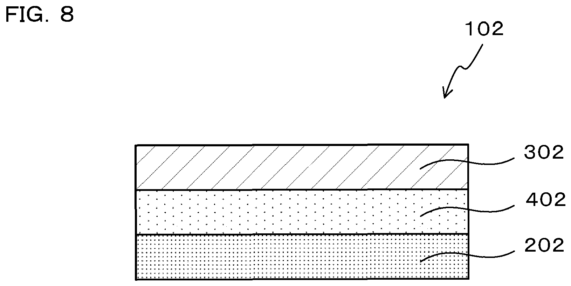

In the present example, an example of an all-solid-state secondary battery using a positive electrode active material will be described. A nonaqueous electrolyte secondary battery 102 of the present example is configured as an all-solid-state secondary battery. Specifically, as illustrated in Fig. 8, the nonaqueous electrolyte secondary battery 102 includes a positive electrode 202 containing a positive electrode active material, a negative electrode 302 containing a negative electrode active material, and a separator 402 containing a solid electrolyte and interposed between the positive electrode 202 and the negative electrode 302.

The positive electrode 202 contains a positive electrode active material coated with lithium niobate, a conductive assistant, and a solid electrolyte. The positive electrode active material used for the positive electrode 202 of the present example is the active material S5 in Example 1, the conductive assistant is a carbon nanofiber, and the solid electrolyte is Li₃PS₄.

A method for coating the positive electrode active material with lithium niobate is, for example, as follows. First, a treatment liquid is prepared by mixing hydrogen peroxide water having a concentration of 30 to 35.5%, niobic acid, ammonia water having a concentration of 28 to 30%, and lithium hydroxide. The treatment liquid and the positive electrode active material are mixed, and then the solvent is removed using an evaporator, whereby a film of lithium niobate can be formed on the surface of the positive electrode active material.

The negative electrode 302 contains a negative electrode active material, a conductive assistant, and a solid electrolyte. The negative electrode active material used for the negative electrode 302 of the present example is lithium titanate, the conductive auxiliary agent is carbon nanofiber, and the solid electrolyte is Li₃PS₄.

The separator 402 is made of a solid electrolyte. The solid electrolyte used for the separator 402 is specifically Li₃PS₄.

**In** preparing the nonaqueous electrolyte secondary battery 102, first, a positive electrode mixture containing a positive electrode active material, a conductive assistant, and a solid electrolyte, and a negative electrode mixture containing a negative electrode active material, a conductive assistant, and a solid electrolyte are prepared. Next, the positive electrode mixture is put into a press mold. Thereafter, the positive electrode mixture in the press mold is compressed to form the positive electrode 202 in the press mold. Next, a separator mixture containing a solid electrolyte is placed on the positive electrode 202 in the press mold, and the separator mixture is compressed together with the positive electrode 202. Thus, the separator 402 is formed on the positive electrode 202. Thereafter, the negative electrode mixture is placed on the separator 402 in the press mold, and the negative electrode mixture is compressed together with the positive electrode 202 and the separator 402. As described above, the nonaqueous electrolyte secondary battery 102 in which the positive electrode 202, the separator 402, and the negative electrode 302 are sequentially laminated can be obtained.

Next, the discharge capacity of the nonaqueous electrolyte secondary battery 102 was measured by the following method. First, the nonaqueous electrolyte secondary battery 102 was charged in a constant current-constant voltage mode at a temperature of 25°C. The current density in the constant current mode was set to 18 mA/g, and switching to the constant voltage mode was performed when the voltage of the secondary battery reached 2.9 V. In the constant voltage mode, the charging voltage was set to 2.9 V, and charging was performed until the current value reached 0.01 mA. After the current density in the constant voltage mode reached 0.01 mA, charging and discharging were stopped for 10 minutes to stabilize the potential of the secondary battery. Thereafter, the nonaqueous electrolyte secondary battery 102 was discharged in a constant current-constant voltage mode, and a discharge curve at this time was acquired. The current density in the constant current mode was set to 18 mA/g, and switching to the constant voltage mode was performed when the voltage of the secondary battery reached 1.0 V. In the constant voltage mode, the discharging voltage was set to 1.0 V, and discharging was performed until the current value reached 0.01 mA.

The discharge capacity of the nonaqueous electrolyte secondary battery 102 calculated from the discharge curve was 167 mAh/g. From this result, it can be understood that the positive electrode active material can be applied not only to a lithium-ion secondary battery but also to an all-solid-state secondary battery.

Although the specific aspects of the positive electrode active material, the method for producing the same, and the nonaqueous electrolyte secondary battery according to the present invention have been described above on the basis of Examples, the aspects of the positive electrode active material, the method for producing the same, and the nonaqueous electrolyte secondary battery according to the present invention are not limited to the aspects of Examples described above.

For example, in Example 1 described above, data on the secondary battery for evaluation in which metal lithium is used as a counter electrode is shown, and from the results of these Examples, it is found that the above-described positive electrode active material is suitable for a positive electrode of a lithium-ion secondary battery. In construction of an actual lithium-ion secondary battery, a positive electrode containing the positive electrode active material of Example 1 and a negative electrode containing a negative electrode active material made of carbon, a lithium-based oxide, or the like can be combined.

## Claims

1. A positive electrode active material for use in a nonaqueous electrolyte secondary battery, comprising
an O2-type layered structure attributable to space group P6₃mc as a main phase; and
a composition represented by a composition formula LiₐNa_{b}Mn_{c}M_{d}O_{(2 ± α)}, in the composition formula, M represents one or more additive elements selected from the group consisting of Ni, Al, Ti, Sn, Zr, Nb, W, and Mo, the additive elements including at least Ni, and a to d and α satisfy 0.7 ≤ a ≤ 1.33, 0 < b < 0.1, 0.7 < c < 0.9, 0.9 < c + d <1.1, 4 ≤ c/d ≤ 12, and 0 ≤ α ≤ 0.3.

2. The positive electrode active material according to claim 1, wherein a value of b in the composition formula satisfies 0.001 ≤ b ≤ 0.07, and a ratio c/d of a value of c to a value of d is 5 or more and 10 or less.

3. A nonaqueous electrolyte secondary battery comprising a positive electrode, a negative electrode, and a nonaqueous electrolyte, wherein
the positive electrode contains the positive electrode active material according to claim 1 or 2.

4. A method for producing the positive electrode active material according to claim 1 or 2, the method comprising:
preparing an Na-doped precursor which has a crystal phase having a P2-type layered structure attributable to space group P6₃/mmc and contains Na, Mn, and the additive element M; and
then, substituting an Na atom in the Na-doped precursor with an Li atom by ion exchange.

## Patentansprüche

1. Aktivmaterial einer positiven Elektrode zur Nutzung in einer Sekundärbatterie mit einem nichtwässrigen Elektrolyten, das
eine geschichtete Struktur eines O2-Typs, die einer Raumgruppe P6₃mc als eine Hauptphase zurechenbar ist, und
eine Zusammensetzung, die durch eine Zusammensetzungsformel LiₐNa_{b}Mn_{c}M_{d}O_{(2 ± α)} dargestellt ist, in welcher Zusammensetzungsformel M ein oder mehrere Zusatzelemente, die aus der Gruppe ausgewählt sind, die aus Ni, Al, Ti, Sn, Zr, Nb, W, und Mo besteht, wobei die Zusatzelemente mindestens Ni aufweisen und a bis d und α 0,7 ≤ a ≤ 1,33, 0 < b < 0,1, 0,7 < c < 0,9, 0,9 < c + d < 1,1, 4 ≤ c/d ≤ 12 und 0 ≤ α ≤ 0,3 erfüllen,
aufweist.

2. Aktivmaterial einer positiven Elektrode nach Anspruch 1, bei dem ein Wert von b in der Zusammensetzungsformel 0,001 ≤ b ≤ 0,07 erfüllt und ein Verhältnis c/d eines Werts c zu einem Wert d 5 oder mehr und 10 oder weniger ist.

3. Sekundärbatterie mit einem nichtwässrigen Elektrolyten, die eine positive Elektrode, eine negative Elektrode und einen nichtwässrigen Elektrolyten aufweist, bei der
die positive Elektrode das Aktivmaterial einer positiven Elektrode nach Anspruch 1 oder 2 aufweist.

4. Verfahren zum Herstellen des Aktivmaterials einer positiven Elektrode nach Anspruch 1 oder 2, das aufweist:
ein Vorbereiten eines Na-dotierten Vorläufers, der eine Kristallphase mit einer geschichteten Struktur eines P2-Typs, die einer Raumgruppe P6₃/mmc zurechenbar ist, aufweist und Na, Mn und das Zusatzelement M aufweist; und
dann ein Austauschen eines Na-Atoms in dem Na-dotierten Vorläufer mit einem Li-Atom durch Ionenaustausch.

## Revendications

1. Matériau actif d'électrode positive destiné à être utilisé dans une batterie secondaire à électrolyte non aqueux, comprenant
une structure en couches de type O2 attribuable au groupe d'espace P6₃mc en tant que phase principale ; et
une composition représentée par une formule de composition LiₐNa_{b}Mn_{c}M_{d}O_{(2 ± α)} dans la formule de composition, M représente un ou plusieurs éléments additifs choisis dans le groupe constitué du Ni, Al, Ti, Sn, Zr, Nb, W et Mo, les éléments additifs comprenant au moins Ni, et a à d et α satisfont 0,7 ≤ a ≤ 1,33, 0 < b < 0,1, 0,7 < c < 0,9, 0,9 < c + d < 1,1, 4 ≤ c/d ≤ 12 et 0 ≤ α ≤ 0,3

2. Matériau actif d'électrode positive selon la revendication 1, dans lequel une valeur de b dans la formule de composition satisfait à 0,001 ≤ b ≤ 0,07, et un rapport c/d d'une valeur de c à une valeur de d est de 5 ou plus et de 10 ou moins.

3. Batterie secondaire à électrolyte non aqueux comprenant une électrode positive, une électrode négative et un électrolyte non aqueux, dans laquelle
l'électrode positive contient le matériau actif d'électrode positive selon la revendication 1 ou 2.

4. Procédé de production du matériau actif d'électrode positive selon la revendication 1 ou 2, le procédé comprenant les étapes consistant à :
préparer un précurseur dopé au Na qui présente une phase cristalline ayant une structure en couches de type P2 attribuable au groupe d'espace P6₃/mmc et qui contient du Na, du Mn et l'élément additif M ; et
ensuite, substituer un atome de Na dans le précurseur dopé au Na par un atome de Li par échange d'ions.
